# EUROPÄISCHE PATENTSCHRIFT

(11) **EP 4 281 346 B1**
(45) Veröffentlichungstag und Bekanntmachung des Hinweises auf die Patenterteilung: **26.03.2025**
(21) Anmeldenummer: 22706223.9
(22) Anmeldetag: 21.01.2022
(51) Int. Cl.: B60W 30/10, B62D 15/02, G08G 1/16, G05D 1/00

(54) **VERFAHREN ZUM BEREITSTELLEN UND BETREIBEN EINER FAHRZEUGKOLONNE**
METHOD FOR PROVIDING AND OPERATING A VEHICLE CONVOY
PROCÉDÉ POUR FOURNIR ET FAIRE FONCTIONNER UN CONVOI DE VÉHICULES

(30) Priorität: 22.01.2021 AT 500332021
(43) Veröffentlichungstag der Anmeldung: 29.11.2023
(73) Patentinhaber: Rosenbauer International AG, 4060 Leonding (AT)
(72) Erfinder: RONACHER, Alexander, 4063 Hörsching (AT)
(74) Vertreter: Burger, Hannes
(86) Internationale Anmeldenummer: PCT/AT2022/060017
(87) Internationale Veröffentlichungsnummer: WO 2022/155696

(56) Entgegenhaltungen:
- AU-A1- 2019 283 905
- DE-A1- 102011 012 551
- DE-A1- 102019 101 443

## Beschreibung

Die Erfindung betrifft ein Verfahren zum Bereitstellen und Betreiben einer Fahrzeugkolonne umfassend eine Mehrzahl von unmittelbar hintereinander angeordneten Fahrzeugen, bei dem zumindest ein Folgefahrzeug einem Leitfahrzeug in Fortbewegungsrichtung autonom folgt. Die DE 102011 012 551 A1 betrifft große Schwerlastkraftwagen in Bergbaubetrieben, welche zum Abtransport von Erdmaterial vorgesehen sind. Zum Steuern dieser Schwerlastkraftwagen wird eine Fahrzeugkombination aus einem fahrergesteuertem Leitfahrzeug und aus mindestens einem virtuell angekoppelten, fahrerlosen Schwerlastkraftwagen vorgeschlagen. Das fahrergesteuerte Leitfahrzeug bietet zumindest für einen Fahrer Platz und kann als wendiger und komfortabler Geländewagen ausgestattet sein. Das fahrergesteuerte Leitfahrzeug beinhaltet elektronische Einrichtungen, die Teile der elektronischen Deichsel sind, welche ein fernsteuerndes, drahtloses Steuern von Schwerlastkraftwagen ermöglicht. Die elektronischen Einrichtungen können Fahrerwünsche mittels Funksignalen an die Schwerlastkraftwagen weiterleiten. DE 10 2019 101443 A1 zeigt insbesondere die Merkmale des Oberbegriffs von Anspruch 1.

Aufgabe der vorliegenden Erfindung war es, ein Verfahren zur Verfügung zu stellen, mittels dem eine bezüglich des Leitfahrzeugs dazu spurtreue Nachfolgefahrt von dem zumindest einen Folgefahrzeug erzielbar ist. Weiters soll aber auch die Bildung einer Fahrzeugkolonne sowie deren Fahrbetrieb verbessert und rascher gestaltet werden.

Diese Aufgabe wird durch ein Verfahren gemäß den Ansprüchen gelöst.

Das Verfahren ist dazu vorgesehen, eine Fahrzeugkolonne umfassend eine Mehrzahl von unmittelbar hintereinander angeordneten Fahrzeuge bereitzustellen und zu betreiben, bei dem zumindest ein Folgefahrzeug einem Leitfahrzeug in Fortbewegungsrichtung autonom folgt. Dabei werden die einzelnen die Fahrzeugkolonne bildenden Fahrzeuge mittels einer elektronischen Deichsel virtuell aneinander gekoppelt. Bei dem Verfahren sind zumindest folgende Schritte vorgesehen:
- dass vom Leitfahrzeug eine Leitfahrzeug-Mittellängsachse in Richtung seiner Leitfahrzeug-Länge definiert wird,
- dass von dem zumindest einen ersten Folgefahrzeug eine Folgefahrzeug-Mittellängsachse in Richtung seiner Folgefahrzeug-Länge definiert wird,
- dass bei einer Projektion in Richtung auf eine ebenflächige Aufstandsfläche von der Leitfahrzeug-Mittellängsachse eine Projektionslinie und von der Folgefahrzeug-Mittellängsachse des zumindest einen ersten Folgefahrzeugs eine weitere Projektionslinie definiert wird,
- dass die beiden Projektionslinien in einer gemeinsamen Geraden verlaufend angeordnet werden,
- dass ein erster Soll-Abstandswert zwischen dem Leitfahrzeug und dem zumindest einen ersten Folgefahrzeug definiert wird und das zumindest eine erste Folgefahrzeug hinterhalb des Leitfahrzeugs in dem Soll-Abstandswert angeordnet wird,
- dass zwischen dem Leitfahrzeug und dem zumindest einen ersten Folgefahrzeug ein virtueller erster Gelenkpunkt definiert wird, welcher virtueller erster Gelenkpunkt sowohl auf der Projektionsline der Leitfahrzeug-Mittellängsachse als auch auf der Projektionsline der Folgefahrzeug-Mittellängsachse liegend angeordnet wird,
- dass der virtuelle erste Gelenkpunkt vom Leitfahrzeug in einem Leitfahrzeug-Abstand und vom zumindest einen ersten Folgefahrzeug in einem ersten Folgefahrzeug-Abstand angeordnet wird, und
- dass vom virtuellen ersten Gelenkpunkt ein Bezugspunkt für die Durchführung der Lenkbewegungen des zumindest einen ersten Folgefahrzeugs bei der autonomen Fortbewegung der Fahrzeugkolonne definiert wird.

Vorteilhaft ist bei den hier gewählten Verfahrensschritten, dass so zwischen dem Leitfahrzeug und dem zumindest einen ersten Folgefahrzeug ein eindeutig festgelegter virtueller Bezugspunkt für die Steuerung der Fahrbewegung, insbesondere der Lenkbewegung des unmittelbar nachfolgenden Folgefahrzeugs geschaffen wird. Der vom virtuellen Gelenkpunkt, welcher von den jeweils unmittelbar hintereinander befindlichen Fahrzeugen jeweils auch beabstandet ist und zusätzlich stets auf einer von den jeweiligen Mittellängsachsen definierten Projektionslinien liegend angeordnet wird, gebildete oder definierte Bezugspunkt bildet für die autonome Nachfolgefahrt des ersten Folgefahrzeugs somit einen Basispunkt, um das Folgefahrzeug hinterhalb des Leitfahrzeugs innerhalb des von diesem virtuell definierten Fahrtunnels autonom nachzuführen. Durch die beidseitig beabstandete Anordnung des virtuellen Gelenkpunkts von den beiden unmittelbar hintereinander befindlichen Fahrzeugen wird so das spurtreue Nachfahren noch erleichtert.

Weiters ist ein Vorgehen vorteilhaft, bei dem folgende weitere Schritte vorgesehen sind:
- dass zur Bildung der Fahrzeugkolonne zumindest ein weiteres Folgefahrzeug bereitgestellt wird, bevorzugt mehrere weitere Folgefahrzeuge, anschließend an das erste Folgefahrzeug bereitgestellt werden,
- dass von jedem der weiteren Folgefahrzeuge jeweils eine weitere Folgefahrzeug-Mittellängsachse in Richtung seiner Folgefahrzeug-Länge definiert wird,
- dass bei einer Projektion in Richtung auf die ebenflächige Aufstandsfläche von jeder der weiteren Folgefahrzeug-Mittellängsachsen jeweils eine weitere Projektionslinie definiert wird,
- dass die jeweiligen weiteren Projektionslinien in einer gemeinsamen Geraden verlaufend angeordnet werden,
- dass jeweils ein weiterer Soll-Abstandswert zwischen den jeweiligen Folgefahrzeugen definiert wird und jedes der weiteren Folgefahrzeuge jeweils in dem weiteren Soll-Abstandswert von dem unmittelbar in der Fahrzeugkolonne vorgeordnet befindlichen Folgefahrzeug angeordnet wird,
- dass zwischen dem ersten Folgefahrzeug und dem unmittelbar nachfolgenden weiteren Folgefahrzeug und gegebenenfalls auch zwischen jedem der nachfolgenden weiteren Folgefahrzeuge jeweils ein virtueller weiterer Gelenkpunkt definiert wird und jeder der weiteren Gelenkpunkte jeweils auf beiden von den jeweiligen Folgefahrzeug-Mittellängsachsen der Folgefahrzeuge definierten Projektionslinien liegend angeordnet wird,
- dass jeder der weiteren Gelenkpunkte von den beiden jeweils in Fortbewegungsrichtung gesehen benachbart befindlichen Folgefahrzeugen jeweils in einem weiteren Folgefahrzeug-Abstand angeordnet wird, und
- dass von jedem der weiteren Gelenkpunkte jeweils ein weiterer Bezugspunkt für die Durchführung der Lenkbewegungen des jeweiligen Folgefahrzeugs bei der autonomen Fortbewegung der Fahrzeugkolonne definiert wird.

Damit kann auch zwischen jeweils unmittelbar hintereinander befindlichen Folgefahrzeugen das spurtreue autonome Nachfolgen oder Nachfahren ebenfalls erleichtert und sicherer gestaltet werden.

Eine weitere vorteilhafte Vorgehensweise ist dadurch gekennzeichnet, dass vom Leitfahrzeug eine virtuelle Leitfahrzeug-Grundrisskontur im Wesentlichen in einer Rechteckform von dessen Maximalabmessungen mit seiner Leitfahrzeug-Länge und einer Leitfahrzeug-Breite gebildet wird,
- dass die Leitfahrzeug-Mittellängsachse in halber Leitfahrzeug-Breite verlaufend angeordnet wird,
- dass von jedem Folgefahrzeug eine virtuelle Folgefahrzeug-Grundrisskontur im Wesentlichen in einer Rechteckform von dessen Maximalabmessungen mit seiner Folgefahrzeug-Länge und einer Folgefahrzeug-Breite gebildet wird, und
- dass jede der Folgefahrzeug-Mittellängsachsen jeweils in halber Folgefahrzeug-Breite verlaufend angeordnet wird.

So kann damit eine eindeutig bestimmte und vor allem sichere, mittige Anordnung der einzelnen Mittellängsachse bei den einzelnen Fahrzeugen erzielt werden. Dies ist insbesondere für die kollisionsfreie Durchführung von Kurvenfahrten vorteilhaft.

Vorteilhaft ist auch eine Verfahrensvariante, bei welcher der Leitfahrzeug-Abstand und der erste Folgefahrzeug-Abstand und gegebenenfalls auch jeder weitere der Folgefahrzeug-Abstände mit zueinander gleich großen Abstandswerten ausgebildet werden. Damit kann eine symmetrische Anordnung des jeweiligen virtuellen Gelenkpunkts zwischen jeweils unmittelbar hintereinander befindlichen Fahrzeugen erzielt werden.

Eine andere Vorgehensweise zeichnet sich dadurch aus, wenn bei der zueinander geradlinigen Ausrichtung der Projektionslinien der Leitfahrzeug-Mittellängsachse und der Folgefahrzeug-Mittellängsachse des zumindest einen ersten Folgefahrzeugs die aus dem Leitfahrzeug-Abstand und dem ersten Folgefahrzeug-Abstand gebildete Summe dem Soll-Abstandswert entspricht. Damit kann sichergestellt werden, dass unmittelbar hintereinander befindliche Fahrzeuge bei der Geradeausfahrt in dem vorbestimmten Soll-Abstand angeordnet werden und auch der virtuelle Gelenkpunkt in seiner relativen Position exakt definiert wird.

Weiters ist ein Vorgehen vorteilhaft, bei dem bei einer zueinander unter einem Knickwinkel abgewinkelten Ausrichtung der Projektionslinien der Leitfahrzeug-Mittellängsachse und der Folgefahrzeug-Mittellängsachse des zumindest einen ersten Folgefahrzeugs der Leitfahrzeug-Abstand und der erste Folgefahrzeug-Abstand jeweils virtuell soweit vergrößert werden, bis ein Ist-Abstandswert zwischen einander nächstliegend befindlichen Abschnitten der beiden unmittelbar hintereinander befindlichen virtuellen Grundrisskonturen wiederum zumindest dem Soll-Abstandswert entspricht. Durch die jeweilige durchgeführte virtuelle Verlängerung die jeweiligen Abstände des virtuellen Gelenkpunkts von den beiden unmittelbar hintereinander befindlichen Fahrzeugen kann so auch in den ansonsten je nach Ausmaß der Lenkbewegung und dem damit verbundenen Verkleinern des Kurven-Radiuses sich einander annähernden Eckbereichen die Einhaltung des Soll-Abstandswerts erzielt werden. So können ansonsten damit einhergehende Kollisionen bei Einhaltung des spurtreuen autonomen Nachfahrens verhindert werden.

Eine weitere vorteilhafte Vorgehensweise ist dadurch gekennzeichnet, dass der Leitfahrzeug-Abstand und der erste Folgefahrzeug-Abstand virtuell jeweils um dasselbe Längenausmaß vergrößert werden. Damit kann weiterhin eine symmetrische Beabstandung des virtuellen Gelenkpunkts zwischen den unmittelbar hintereinander befindlichen Fahrzeugen erzielt werden.

Vorteilhaft ist auch eine Verfahrensvariante, bei welcher die aus den jeweiligen zwei weiteren Folgefahrzeug-Abständen von unmittelbar hintereinander befindlichen Folgefahrzeugen gebildete Summe jeweils dem Soll-Abstandswert entspricht. Damit kann auch bei einer zueinander geradlinigen Ausrichtung der einzelnen Projektionslinien sichergestellt werden, dass unmittelbar hintereinander befindliche Fahrzeuge bei deren Geradeausfahrt in dem vorbestimmten Soll-Abstand angeordnet werden und auch der virtuelle Gelenkpunkt in seiner relativen Position exakt definiert wird.

Eine andere Vorgehensweise zeichnet sich dadurch aus, wenn bei einer zueinander unter einem Knickwinkel abgewinkelten Ausrichtung der jeweiligen Projektionslinien von Folgefahrzeug-Mittellängsachsen von jeweils unmittelbar hintereinander befindlichen Folgefahrzeugen die weiteren Folgefahrzeug-Abstände jeweils virtuell soweit vergrößert werden, bis ein Ist-Abstandswert zwischen einander nächstliegend befindlichen Abschnitten der beiden unmittelbar hintereinander befindlichen Grundrisskonturen wiederum zumindest dem Soll-Abstandswert entspricht. Durch die jeweilige durchgeführte virtuelle Verlängerung die jeweiligen Abstände des virtuellen Gelenkpunkts von den beiden unmittelbar hintereinander befindlichen Fahrzeugen kann so auch in den ansonsten je nach Ausmaß der Lenkbewegung und dem damit verbundenen Verkleinern des Kurven-Radiuses sich einander annähernden Eckbereichen die Einhaltung des Soll-Abstandswerts erzielt werden. So können ansonsten damit einhergehende Kollisionen bei Einhaltung des spurtreuen autonomen Nachfahrens verhindert werden.

Weiters ist ein Vorgehen vorteilhaft, bei dem der Ist-Abstandswert mittels zumindest eines Abstandssensors ermittelt wird. Damit kann stets eine laufende Überwachung und Einhaltung des Ist-Abstandswerts ermöglicht werden.

Eine weitere vorteilhafte Vorgehensweise ist dadurch gekennzeichnet, dass zumindest ein Abstandssensor jeweils in einem äußeren Eckbereich der Grundrisskontur angeordnet wird, insbesondere jeweils in einem äußeren Eckbereich der Grundrisskontur des in Fortbewegungsrichtung gesehen vorderen Fahrzeugs angeordnet wird. So kann eine noch bessere und sicherere Überwachung des Ist-Abstandswerts ermöglicht werden

Vorteilhaft ist auch eine Verfahrensvariante, bei welcher die Fahrzeuge der Fahrzeugkolonne mit einem maximalen Fahrzeugbreitewert ausgebildet werden, der aus einem Fahrzeugbreite-Wertebereich stammt, dessen untere Grenze 1 m, insbesondere 1,4 m, und dessen obere Grenze 3 m, insbesondere 2,55 m, beträgt. Damit können die einzelnen Fahrzeuge je nach Bedarf an die unterschiedlichsten Einsatzbedingungen und Anforderungen angepasst werden.

Eine andere Vorgehensweise zeichnet sich dadurch aus, wenn jene die Fahrzeugkolonne bildenden Fahrzeuge jeweils aus einem Basis-Fahrgestell und einem darauf bedarfsweise anordenbaren Aufbaumodul, insbesondere einem Einsatzmodul, gebildet werden und die Basis-Fahrgestelle und die Aufbaumodule an einem Lagerplatz eines Stützpunkts voneinander getrennt abgestellt werden. Damit kann insbesondere bei den Basis-Fahrgestellen ein hohe Anzahl an gleichartig ausgebildeten Komponenten zur Verfügung gestellt werden. So können weiters die Lagerhaltung und/oder auch die Wartung durch die Vielzahl an gleichen Bauteilen wesentlich vereinfacht werden. Weiters kann damit auch der erforderliche Platzbedarf für das Abstellen und Lagern reduziert werden. Die Basis-Fahrgestelle und/oder auch die Aufbaumodule könnten z.B. in einem Regallager abgestellt und aus diesem z.B. mittels eigener Entnahme- und/oder Fördervorrichtungen aus diesem entnommen und an einem vorbestimmten Montageplatz zum jeweiligen Fahrzeug zusammengesetzt werden.

Eine weitere vorteilhafte Vorgehensweise ist dadurch gekennzeichnet, dass in einer Steuerungsvorrichtung einer Leitstelle für zueinander unterschiedliche durchzuführende Missionen für die jeweils durchzuführende einzelne Mission die dazu erforderlichen Aufbaumodule in einem Datensatz hinterlegt sind und bei einer eingehenden Anforderung zur Durchführung der Mission jeweils die im jeweiligen Datensatz hinterlegten Aufbaumodule ausgewählt und auf jeweils eines der Basis-Fahrgestelle montiert und damit die Fahrzeuge bereitgestellt werden, insbesondere das zumindest eine Folgefahrzeug bereitgestellt wird. Damit kann die Zusammenstellung der jeweiligen Fahrzeuge sicherer und auch rascher durchgeführt werden. Dies kann gegebenenfalls auch von Hebe- und Förderanlagen automatisch und/oder teilautomatisiert durchgeführt werden.

Vorteilhaft ist auch eine Verfahrensvariante, bei welcher in dem für die jeweils durchzuführende Mission hinterlegten Datensatz auch die Reihenfolge der Folgefahrzeuge hinterlegt ist und bei Fahrtantritt hinterhalb des Leitfahrzeugs die bereitgestellten Folgefahrzeuge in der im entsprechenden Datensatz vordefinierten Reihenfolge zu der Fahrzeugkolonne nacheinander angeordnet werden. So können beim Eintreffen der Fahrzeugkolonne am Bestimmungsort unnötige Rangierfahrten vermieden werden und auch rasch mit den erforderlichen Tätigkeiten begonnen werden.

Eine andere Vorgehensweise zeichnet sich dadurch aus, wenn das Leitfahrzeug während der Fahrbewegung der Fahrzeugkolonne von einer natürlichen Person betrieben und manuell gelenkt wird und das zumindest eine Folgefahrzeug autonom bis zu einem ersten Bestimmungsort nachfolgt und dass am ersten Bestimmungsort das zumindest eine Folgefahrzeug von einer natürlichen Person übernommen und von der natürlichen Person weiter zu einem zweiten Bestimmungsort geführt wird. So kann eine individueller Anfahrt der Fahrzeugkolonne zum ersten Bestimmungsort durchgeführt werden. Nach der Ankunft am ersten Bestimmungsort können dann zumindest die Folgefahrzeuge an den jeweiligen weiteren Bestimmungsort weiter verbracht werden.

Weiters ist ein Vorgehen vorteilhaft, bei dem das zumindest eine Folgefahrzeug von der natürlichen Person betrieben und manuell gelenkt wird oder dass das zumindest eine Folgefahrzeug hinterhalb der natürlichen Person ausgehend vom ersten Bestimmungsort hin zum zweiten Bestimmungsort autonom nachfolgt. Damit kann das oder können zumindest die Folgefahrzeug je nach Anforderung und durchzuführender Einzelmission an den dazu bestimmten zweiten Bestimmungsort sicher hingelenkt oder hingeführt werden.

Eine weitere vorteilhafte Vorgehensweise ist dadurch gekennzeichnet, dass ausgehend vom Stützpunkt bis zu jeweils einem ersten Bestimmungsort die jeweilige Fahrstrecke vorab zumindest einmal abgefahren wird und dabei die gesamte Fahrstrecke elektronisch aufgezeichnet und in einem eigenen Datensatz abgespeichert wird und bei einer Anforderung, insbesondere in einem Einsatzfall, die vorbestimmte jeweilige Fahrstrecke ausgewählt und der dazugehörige eigene Datensatz dem Leitfahrzeug bereitgestellt wird und die gesamte Fahrzeugkolonne ausgehend vom Stützpunkt entlang der im jeweils eigenen Datensatz hinterlegten jeweilige Fahrstrecke autonom bis zum ersten Bestimmungsort hinfährt. Damit wird die Möglichkeit geschaffen, eine vollständig oder teilvollständige autonome Fahrbewegung der gesamten Fahrzeugkolonne durchführen zu können.

Zum besseren Verständnis der Erfindung wird diese anhand der nachfolgenden Figuren näher erläutert.

Es zeigen jeweils in stark vereinfachter, schematischer Darstellung:
- Fig. 1: einen Teilausschnitt einer Landkarte mit einer einen Stützpunkt bildenden Einsatzzentrale und einer stilisiert dargestellten Fahrzeugkolonne aus einem Leitfahrzeug und mehreren Folgefahrzeugen, in Draufsicht;
- Fig. 2: eine Fahrzeugkolonne mit mehreren Fahrzeugen bei einer geradlinigen Anordnung der Fahrzeuge hintereinander, in Draufsicht und vergrößerter Darstellung;
- Fig. 3: einen ersten Teil der Fahrzeugkolonne nach Fig. 2, jedoch in einer Kurvenfahrt;
- Fig. 4: einen weiteren Teil der Fahrzeugkolonne nach Fig. 2 mit drei hintereinander befindlichen Folgefahrzeugen, in deren Kurvenfahrt.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Begriff "insbesondere" wird nachfolgend so verstanden, dass es sich dabei um eine mögliche speziellere Ausbildung oder nähere Spezifizierung eines Gegenstands oder eines Verfahrensschritts handeln kann, aber nicht unbedingt eine zwingende, bevorzugte Ausführungsform desselben oder eine zwingende Vorgehensweise darstellen muss.

In ihrer vorliegenden Verwendung sollen die Begriffe "umfassend", "weist auf", "aufweisend", "schließt ein", "einschließlich", "enthält", "enthaltend" und jegliche Variationen dieser eine nicht ausschließliche Einbeziehung abdecken.

Als weiterer Begriff wird auch noch "wahlweise" verwendet. Darunter wird verstanden, dass dieser Verfahrensschritt oder diese Anlagenkomponente grundsätzlich vorhanden ist, jedoch je nach Einsatzbedingungen eingesetzt werden kann, dies jedoch nicht zwingend erfolgen muss.

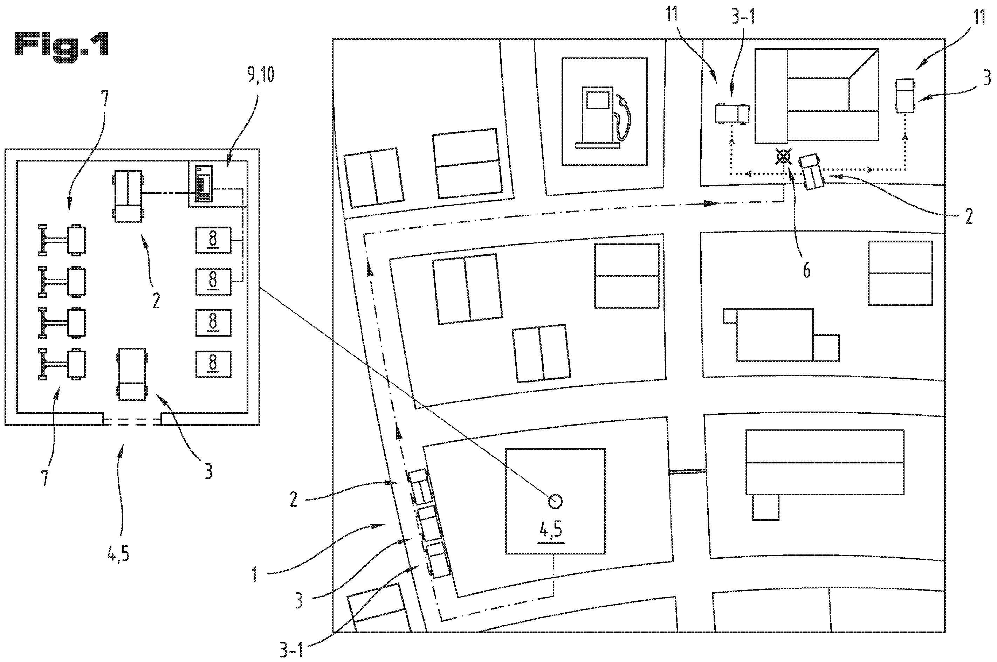

Bei dem nachfolgend beschriebenen Verfahren wird die Bereitstellung und das Betreiben einer Fahrzeugkolonne 1 näher und detaillierter beschrieben. Dazu wird in der Fig. 1 eine stark stilisierte Darstellung in Form eines Landkartenausschnittes gewählt.

Die Fahrzeugkolonne 1 umfasst eine Mehrzahl von unmittelbar hintereinander angeordneten Fahrzeugen. Die einzelnen Fahrzeuge der Fahrzeugkolonne 1 werden von einem Leitfahrzeug 2 und zumindest einem Folgefahrzeug 3 gebildet, wobei das zumindest eine Folgefahrzeug 3 dem Leitfahrzeug 2 in Fortbewegungsrichtung autonom folgt oder selbsttätig nachfährt. Dazu werden die die Fahrzeugkolonne 1 bildenden Fahrzeuge mittels einer elektronischen Deichsel virtuell aneinander gekoppelt. Dieses System kann auch als Platooning bezeichnet werden.

Als Platooning wird allgemein ein System für den Straßenverkehr verstanden, bei dem mehrere Fahrzeuge mithilfe eines technischen Steuerungssystems in sehr geringem Abstand hintereinander fahren können, ohne dass die Verkehrssicherheit beeinträchtigt wird. Hierdurch soll unter anderem der Energiebedarf der einzelnen Fahrzeuge reduziert werden.

Das zumindest eine dem Leitfahrzeug 2 folgende Folgefahrzeug 3 der Fahrzeugkolonne 1 ist dazu ausgelegt, in einem pilotierten Fahrbetrieb dem Leitfahrzeug autonomen zu folgen. Im Kraftfahrzeug muss daher zur Durchführung des Verfahrens nicht zwingend ein Benutzer des Kraftfahrzeugs, wie zum Beispiel ein Fahrer, anwesend sein.

Die Fahrzeuge können für die unterschiedlichsten Zwecke dienen. Im vorliegenden möglichen Beispiel kann es sich um Fahrzeuge für den Hilfs- und/oder Rettungsdienst handeln. Insbesondere kann es sich dabei um Einsatzfahrzeuge im Feuerwehrwesen handeln.

Durch den ständig steigenden und zunehmenden Straßenverkehr und die möglichen damit verbundenen Staubildungen kann die Anfahrt von einem Stützpunkt 5 hin zu einem ersten Bestimmungsort 6, welcher zumeist den Einsatzort bzw. die Einsatzumgebung bildet, schwierig und nur bedingt hindernislos durchgeführt werden. Der Stützpunkt 5 wird im Feuerwehrwesen sowie auch bei anderen Einsatz- und/oder Hilfsorganisationen zumeist von einer Einsatzzentrale gebildet. Der Stützpunkt 5 umfasst zumeist einen Lagerplatz 4, welcher z.B. im Freien und/oder aber auch in einer Garage angeordnet sein kann.

Weiters steht auch nicht immer eine umfassende Anzahl an Fahrern bzw. Lenkern im Einsatzfall zur Verfügung, Außerdem kann es an entsprechenden Lenkerberechtigungen fehlen.

Die Fahrzeuge 2, 3 der Fahrzeugkolonne 1 können mit einem maximalen Fahrzeugbreitewert ausgebildet werden, der aus einem Fahrzeugbreite-Wertebereich stammt, dessen untere Grenze 1 m, insbesondere 1,4 m, und dessen obere Grenze 3 m, insbesondere 2,55 m, beträgt. Zumeist beträgt die Gehsteigbreite 1,5 m und es kann die Fahrzeugkolonne 1 in ihrer Fahrzeugbreite derart ausgebildet werden, dass diese auch entlang des Gehsteigs auf diesem die Fahrbewegung durchführen kann.

Wird der Fahrzeugbreitewert eher gering gehalten, wie z.B. zwischen 1,3 m und 1,8 m, kann die Fahrzeugkolonne 1 auch direkt in das Innere von Großkaufhäusern oder Einkaufszentren hinein gefahren werden und dort direkt vor Ort zur Durchführung der erforderlichen Mission bereitgestellt werden.

Es hat sich als vorteilhaft herausgestellt, dass eine Art von Baukastensystem vorgesehen wird, mittels welchem die Fahrzeuge 2, 3 der Fahrzeugkolonne 1 gebildet werden können. Um auch eine hohe Stückzahl an gleichartigen Systemkomponenten herstellen und/oder bereitstellen zu können, können die einzelnen Fahrzeuge 2, 3 jeweils ein bevorzugt einheitliches Basis-Fahrgestell 7 umfassen. Das Basis-Fahrgestell 7 umfasst unter anderem den tragenden Fahrzeugrahmen, die Antriebskomponenten mit deren Energieversorgung, die Räder, die Lenkeinheit sowie eine mögliche Kommunikationseinheit.

Weiters können auch eine Mehrzahl von Aufbaumodulen 8 vorgesehen sein. Bei den Aufbaumodulen 8 handelt es sich insbesondere im Feuerwehrwesen zumeist um containerähnliche Boxen, welche zur Aufnahme und Bevorratung der unterschiedlichsten Ausrüstungsgegenstände, Werkzeuge und vieles mehr ausgebildet sind. Da für die Vielzahl an unterschiedlichen Einsatzszenarien und Aufgabenbewältigungen auch die unterschiedlichsten Ausrüstungsgegenstände, Werkzeuge und sonstiges Equipment erforderlich sind, können in jedem der Aufbaumodule 8 die dazu erforderlichen Gegenstände aufgenommen und bei der Anfahrt mitgeführt werden. Bei einer Mehrzahl an jeweils gleichartig ausgebildeten oder ausgerüsteten Aufbaumodule 8 können im Bedarfsfall, insbesondere im Einsatzfall, jeweils gleichartig ausgebildete Aufbaumodule 8 auch an unterschiedliche Bestimmungsorte oder Einsatzorte verlegt werden. Es wäre aber auch noch möglich, je nach Bedarf und Umfang des Einsatzes mehrere gleichartig ausgebildete Aufbaumodule 8 an denselben Bestimmungsort oder Einsatzort zu verlegen.

Die Basis-Fahrgestelle 7 und/oder auch die Aufbaumodule 8 können beim Stützpunkt 5 an dessen Lagerplatz 4, insbesondere in der Garage, voneinander getrennt abgestellt werden. Der Stützpunkt 5 oder die Einsatzzentrale kann auch noch eine Leitstelle 9 mit den unterschiedlichst ausgebildeten Kommunikationsvorrichtungen, Steuerungseinheiten oder Steuerungsvorrichtungen und dergleichen umfassen, wie dies als allgemein bekannt anzusehen ist.

Üblicher Weise erfolgt bei einem Bedarfsfall, Notfall oder einem Einsatzfall die Alarmierung über eine Notrufnummer bei einer zentralen oder überregional befindlichen Haupt-Einsatzzentrale und diese alarmiert und koordiniert zumindest eine im Umkreis des Notfallgeschehens befindlichen Stützpunkt 5 mit dessen Einsatzzentrale und der Leitstelle 9. Jeder dieser Einsatzfälle wird grundsätzlich als durchzuführende Mission bezeichnet, welche je nach Umfang und Ausmaß auch mehrere Teilmissionen umfassen kann. Bei den Stützpunkten 5 mit den jeweiligen Einsatzzentralen sind die Örtlichkeiten und Gegebenheiten in deren Einsatzgebiet gut und genau bekannt.

In einer Steuerungsvorrichtung 10 der Leitstelle 9 sind für eine Vielzahl von unterschiedlichen durchzuführenden Missionen jeweils die dazu erforderlichen Aufbaumodule 8 in einem eigenen Datensatz hinterlegt. Erfolgt in einem Notfall oder Einsatzfall die Anforderung zur Durchführung einer Mission, werden die im jeweiligen dafür vorgesehenen Datensatz hinterlegten Aufbaumodule 8 ausgewählt und auf jeweils einem der Basis-Fahrgestelle 7 montiert. So wird jeweils ein ausgewähltes Aufbaumodul 8 jeweils auf einem eigenen Basis-Fahrgestell 7 angeordnet und montiert. Dies kann z.B. mittels unterschiedlichster Kupplungs- oder Kopplungsanordnungen erfolgen. Ist dies erfolgt, ist das Leitfahrzeug 2 und auch zumindest eines der Folgefahrzeug 3 bereitgestellt worden. Sind mehrere der Folgefahrzeuge 3 vorgesehen, wird zur leichtem Unterscheidung, jedes dem ersten Folgefahrzeug 3 nachfolgende Folgefahrzeug 3 mit dem Zusatz "-1" zum Bezugszeichen 3 versehen.

In dem für die jeweilige Mission hinterlegten Datensatz kann auch noch die Reihenfolge der Folgefahrzeuge 3, 3-1 hinterlegt sein, welche bei Fahrtantritt hinterhalb des Leitfahrzeugs 2 angeordnet und diesem in autonomer Fahrweise folgen sollen. Mittels der vordefinierten Fahrzeug-Reihenfolge bildet das oder bilden die einzelnen Folgefahrzeuge 3, 3-1 hinterhalb des Leitfahrzeugs 2 die Fahrzeugkolonne 1.

Die Anfahrt und damit die Fahrbewegung der Fahrzeugkolonne 1 ausgehend vom Stützpunkt 5, insbesondere der Einsatzzentrale, hin zum ersten Bestimmungsort 6 kann derart erfolgen, dass das Leitfahrzeug 2 von einer natürlichen Person betrieben und manuell gelenkt wird. Unter einer natürlichen Person wird hier ein Mensch verstanden, unabhängig von seinem Geschlecht, wobei die natürliche Person auch als physische Person bezeichnet werden kann. Das zumindest eine Folgefahrzeug 3, 3-1 folgt seinerseits autonom und somit ohne Fahrzeuglenker dem Leitfahrzeug 2 nach. Unter autonomen Nachfolgen wird ein selbsttätiges Nachfahren des jeweiligen Folgefahrzeugs 3, 3-1 mit einem eigenen Antriebssystem und eigenständigen Lenkbewegungen verstanden.

Ist die Fahrzeugkolonne 1 am ersten Bestimmungsort 6 angekommen oder hat diesen erreicht, kann das zumindest eine Folgefahrzeug 3, 3-1 von einer dort befindlichen weiteren natürlichen Person übernommen werden. Diese weitere natürliche Person leitet oder führt das zumindest eine Folgefahrzeug 3, 3-1 vom ersten Bestimmungsort 6 zu einem davon unterschiedlichen und meist davon entfernten zweiten Bestimmungsort 11, nämlich den konkreten Einsatzort für das jeweilige Folgefahrzeug 3. Sind mehrere Folgefahrzeuge 3, 3-1 in der Fahrzeugkolonne 1 vorgesehen, kann jedes der einzelnen Folgefahrzeuge 3, 3-1 von jeweils einer weiteren natürlichen Person übernommen werden und zum jeweiligen zweiten Bestimmungsort 11 geführt oder geleitet werden.

Diese weitere Verfahrbewegung des Folgefahrzeugs 3 oder der Folgefahrzeuge 3, 3-1 kann derart erfolgen, dass das zumindest eine Folgefahrzeug 3, 3-1 von der weiteren natürlichen Person betrieben und auch manuell gelenkt wird. Dazu ist das zumindest eine Folgefahrzeug 3, 3-1 zusätzlich mit einem Platz für die weitere natürliche Person vorzusehen oder auszubilden, damit diese die Fahrbewegung durchführen und steuern kann.

Eine weitere Möglichkeit bestünde darin, dass die weitere natürliche Person über eine nicht näher dargestellte Kommunikationsvorrichtung oder Leitvorrichtung verfügt oder bei sich trägt, damit das zumindest eine Folgefahrzeug 3, 3-1 hinterhalb der natürlichen Person ausgehend vom ersten Bestimmungsort 6 hin zum zweiten Bestimmungsort 11 wiederum autonom nachfolgt. Die weitere natürliche Person bildet mit deren Kommunikationsvorrichtung oder Leitvorrichtung mit dem zumindest einen Folgefahrzeug 3, 3-1 die zuvor beschriebene elektronische Deichsel zur virtuellen aneinander Kopplung aus.

Die Anfahrt und damit verbunden die jeweilige Fahrstrecke ausgehend vom Stützpunkt 5, insbesondere der Einsatzzentrale , bis zu jeweils einem ersten Bestimmungsort 6 kann vorab auch zumindest einmal reell abgefahren werden und dabei die gesamte Fahrstrecke elektronisch aufgezeichnet und in einem eigenen Datensatz abgespeichert werden. Dieser Vorgang kann auch als Lernvorgang bezeichnet werden. Die Daten zur exakten Festlegung der jeweiligen Fahrstrecke können z.B. mittels GPS erfasst werden. Es wäre zusätzlich oder unabhängig davon auch noch möglich, die Fahrstrecke mittel Kamerabildern laufend optisch zu erfassen und daraus die Daten für die Fahrbewegung zu generieren. Es wäre aber auch noch möglich mittels einer Wegstrecken- und Zeitermittlung sowie der dabei erfolgten oder durchgeführten Lenkbewegungen die Fahrstrecke zu definieren. Es kann auch eine Kombination der zuvor beschriebenen Möglichkeiten zur Aufzeichnung und Festlegung der jeweiligen Fahrstrecke durchgeführt werden.

Bei einer Anforderung zur Durchführung einer Mission und bereits vorbekannter und in einem eigenen Datensatz hinterlegten Fahrstrecke oder Fahrweg kann dieser die Fahrstrecke beschreibende Datensatz dem Leitfahrzeug 2 bereitgestellt werden. Dann kann die gesamte Anfahrt vom Leitfahrzeug 2 auch autonom bis hin zum ersten Bestimmungsort 6 durchgeführt werden. Dabei kann aus Sicherheitsgründen auch noch eine natürliche Person im Leitfahrzeug 2 mitfahren und bei einem unvorhergesehenen Ereignis oder einem Hindernis zur Verhinderung eines ungewollten Schadensereignisses in die autonome Fahrweise eingreifen. Dies kann von einem Umfahren des Hindernisses oder einer Staubildung bis zu einem Anhalten reichen. Es wäre auch noch möglich, zusätzliche Sensoren zur Sicherheitsüberwachung der vollkommen autonomen Fahrweise vorzusehen.

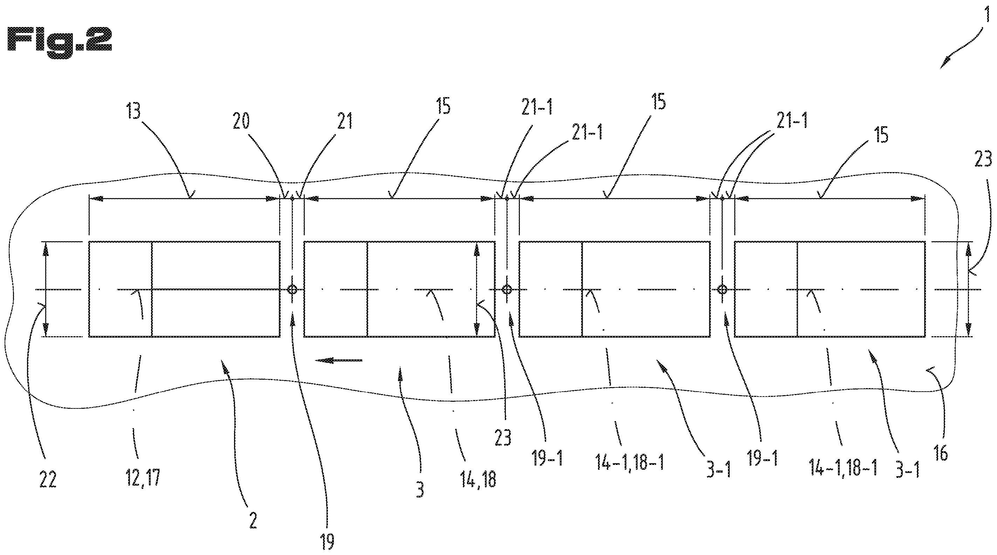

In den Fig. 2 bis 4 ist eine Möglichkeit für das spurgetreue Nachfahren des Folgefahrzeugs 3 oder der Folgefahrzeuge 3, 3-1 hinterhalb des Leitfahrzeugs 2 in der daraus gebildeten Fahrzeugkolonne 1 gezeigt und beschrieben. Die einzelnen Figuren sind jeweils vereinfachte Darstellungen in Draufsicht auf die Fahrzeugkolonne 1.

Die Fig. 2 zeigt die Fahrzeugkolonne 1 mit dem Leitfahrzeug 2 und beispielhaft drei nachfolgend befindliche Folgefahrzeuge 3, 3-1 in einer Geradeausfahrt, wobei die übliche Fahrtrichtung mit einem Pfeil angedeutet ist.

Das zumindest eine erste Folgefahrzeug 3 folgt, wie zuvor beschrieben, dem Leitfahrzeug 2 in einer autonomen Fahrweise mittels einer elektronischen Deichsel virtuell gekoppelt nach. Gleiches gilt aber auch für nachfolgend an das zumindest eine erste Folgefahrzeug 3 nachfolgend befindliche weitere Folgefahrzeug 3-1 und jedes der weiteren Folgefahrzeuge 3-1.

Während der Fahrbewegung definiert das Leitfahrzeug 2 einen virtuellen Kanal oder einen virtuellen Tunnel, innerhalb welchem auch das oder die Folgefahrzeuge 3, 3-1 dem Leitfahrzeug 2 nachfolgen sollen. Dazu ist ein sogenanntes spurtreues Nachfahren oder Nachfolgen innerhalb der vom Leitfahrzeug 2 virtuell definierten seitlichen Kanal- oder Tunnelbegrenzung erforderlich. Die Lenkbewegungen der einzelnen Folgefahrzeuge 3, 3-1 sind dazu entsprechend durchzuführen. So kann nicht nur eine Lenkbewegung der Vorderräder, sondern auch der Hinterräder vorgesehen werden. Es wäre aber auch eine Einzel-Lenkbewegung von jedem der Vorderräder und auch der Hinterräder denkbar. Der Lenkausschlag kann sich dabei je Rad auch um einen Vollkreis von 360° erstrecken.

Es sind zur Bildung und Definition der elektronischen Deichsel folgende Verfahrensschritte vorgesehen:
- Definieren einer Leitfahrzeug-Mittellängsachse 12 des Leitfahrzeugs 2 in Richtung seiner Leitfahrzeug-Länge 13,
- Definieren einer Folgefahrzeug-Mittellängsachse 14 des zumindest einen ersten Folgefahrzeugs 3 in Richtung seine Folgefahrzeug-Länge 15,
- Durchführen einer Projektion in Richtung auf eine ebenflächige Aufstandsfläche 16 von der Leitfahrzeug-Mittellängsachse 12 und dabei definieren einer Projektionslinie 17 der Leitfahrzeug-Mittellängsachse 12,
- Durchführen einer Projektion ebenfalls auf die ebenflächige Aufstandsfläche 16 von der Folgefahrzeug-Mittellängsachse 14 des zumindest einen ersten Folgefahrzeugs 3, wobei dabei eine weitere Projektionslinie 18 der Folgefahrzeug-Mittellängsachse 14 des zumindest einen ersten Folgefahrzeugs 3 definiert wird,
- Anordnen der beiden Projektionslinien 17, 18 in einer gemeinsamen Geraden,
- Definieren eines ersten Soll-Abstandswerts zwischen dem Leitfahrzeug 2 und dem zumindest einen ersten Folgefahrzeug 3 und anordnen des zumindest einen ersten Folgefahrzeugs 3 hinterhalb des Leitfahrzeugs 2 in dem Soll-Abstandswert,
- Definieren eines virtuellen ersten Gelenkpunkts 19 zwischen dem Leitfahrzeug 2 und dem zumindest einen ersten Folgefahrzeug 3, wobei der virtuelle erste Gelenkpunkt 19 sowohl auf der Projektionsline 17 der Leitfahrzeug-Mittellängsachse 12 als auch auf der Projektionsline 18 der Folgefahrzeug-Mittellängsachse 14 liegend angeordnet wird,
- Anordnen des virtuellen ersten Gelenkpunkts 19 in einem Leitfahrzeug-Abstand 20 vom Leitfahrzeug 2 und in einem ersten Folgefahrzeug-Abstand 21 vom zumindest einen ersten Folgefahrzeug 3, und
- Definieren eines Bezugspunkts vom virtuellen ersten Gelenkpunkt 19 für die Durchführung der Lenkbewegungen des zumindest einen ersten Folgefahrzeugs 3 bei der autonomen Fortbewegung der Fahrzeugkolonne 1.

Durch die Definition und Anordnung des virtuellen ersten Gelenkpunkts 19 zwischen dem Leitfahrzeug 2 und dem ersten Folgefahrzeug 3 wird so für die Lenkbewegungen im Zuge des autonomen Nachfahrens des ersten Folgefahrzeugs 3 ein Bezugspunkt für die Fahrzeugsteuerung des nachfolgenden ersten Folgefahrzeugs 3 festgelegt. Die Lenkbewegungen bzw. die jeweiligen Lenkausschläge der Vorderräder und gegebenenfalls auch der Hinterräder werden so gesteuert, dass die Projektionsline 18 der Folgefahrzeug-Mittellängsachse 14 durch den virtuellen ersten Gelenkpunkt 19 verläuft und auch die vordefinierten Abstände des virtuellen ersten Gelenkpunkts 19, nämlich der Leitfahrzeug-Abstand 20 und auch der Folgefahrzeug-Abstand 21 eingehalten werden. Dies ist in Verbindung mit dem ebenfalls vorbestimmten Soll-Abstandswert zwischen den beiden Fahrzeugen 2, 3 bei einer Geradeausfahrt relativ einfach einzuhalten, da auch die Spurtreue leicht eingehalten werden kann. Die Situation bei einer Kurvenfahrt wird nachfolgend noch detailliert beschrieben.

Zumeist wird aber die Fahrzeugkolonne 1 aus mehreren Folgefahrzeugen 3 und 3-1 gebildet oder zusammengestellt, welche jeweils für sich autonom dem Leitfahrzeug 2 folgen. Die Anordnung und Definition des ersten Gelenkpunkts 19 zwischen dem Leitfahrzeug 2 und dem ersten Folgefahrzeug 3 wurde zuvor beschrieben. Um auch ein exaktes und spurtreues Nachfahren oder Nachfolgen jener Folgefahrzeug 3-1, welche bei normaler Vorwärtsfahrtrichtung hinterhalb des ersten Folgefahrzeugs 3 befindlich sind, zu erzielen, ist auch hier die Definition und Festlegung von weiteren Bezugspunkten für die Steuerung der Lenkbewegungen festzulegen.

Bei der Bildung der Fahrzeugkolonne 1 mit dem ersten Folgefahrzeug 3 und einem Folgefahrzeug 3-1 oder mehreren weiteren Folgefahrzeugen 3-1 können folgende Verfahrensschritte durchgeführt werden:
- Bereitstellen von einem Folgefahrzeuge 3-1 oder mehreren weiteren Folgefahrzeuge 3-1 zur Bildung der Fahrzeugkolonne 1, wobei anschließend an das erste Folgefahrzeug 3 nacheinander angeordnet werden,
- Definieren einer weiteren Folgefahrzeug-Mittellängsachse 14-1 von jedem der weiteren Folgefahrzeuge 3-1 in Richtung seiner Folgefahrzeug-Länge 15,
- Durchführen einer Projektion in Richtung auf die ebenflächige Aufstandsfläche 16 von jeder der weiteren Folgefahrzeug-Mittellängsachsen 14-1, wobei dabei jeweils eine weitere Projektionslinie 18-1 definiert wird,
- Anordnen der jeweiligen weiteren Projektionslinien 18-1 in einer gemeinsamen Geraden,
- Definieren eines weiteren Soll-Abstandswerts jeweils zwischen den jeweiligen Folgefahrzeugen 3 ,3-1 und anordnen jedes der weiteren Folgefahrzeuge 3-1 jeweils in dem weiteren Soll-Abstandswert von dem unmittelbar in der Fahrzeugkolonne 1 vorgeordnet befindlichen Folgefahrzeug 3, 3-1,
- Definieren jeweils eines weiteren Soll-Abstandswerts zwischen den jeweiligen Folgefahrzeugen 3 ,3-1 und anordnen jedes der weiteren Folgefahrzeuge 3-1 jeweils in dem weiteren Soll-Abstandswert von dem unmittelbar in der Fahrzeugkolonne 1 vorgeordnet befindlichen Folgefahrzeug 3, 3-1,
- Definieren von virtuellen weiteren Gelenkpunkten 19-1 jeweils zwischen dem ersten Folgefahrzeug 3 und dem unmittelbar nachfolgenden weiteren Folgefahrzeug 3-1 und gegebenenfalls auch zwischen jedem der nachfolgenden weiteren Folgefahrzeuge 3-1, wobei jeder der weiteren Gelenkpunkte 19-1 jeweils auf beiden von den jeweiligen Folgefahrzeug-Mittellängsachsen 14, 14-1 der Folgefahrzeuge 3, 3-1 definierten Projektionslinien 18, 18-1 liegend angeordnet wird,
- Anordnen von jedem der weiteren Gelenkpunkte 19-1 jeweils in einem weiteren Folgefahrzeug-Abstand 21-1 von den beiden jeweils in Fortbewegungsrichtung gesehen benachbart befindlichen Folgefahrzeugen 3, 3-1, und
- Definieren von jeweils einem weiteren Bezugspunkt von jedem der weiteren der Gelenkpunkte 19-1 für die Durchführung der Lenkbewegungen des jeweiligen Folgefahrzeugs 3-1 bei der autonomen Fortbewegung der Fahrzeugkolonne 1.

Um auch bei üblichen Kurvenfahrten die maximalen Außenabmessungen der einzelnen Fahrzeuge 2, 3 und gegebenenfalls 3-1 im Grundriss, also bei einer Draufsicht in Richtung auf die Aufstandsfläche 16, einfacher bei der autonomen Fahrbewegung berücksichtigen zu können, können folgende weitere Verfahrensschritte vorgesehen werden:
- Bilden einer virtuellen Leitfahrzeug-Grundrisskontur vom Leitfahrzeug 2 im Wesentlichen in einer Rechteckform von dessen Maximalabmessungen mit seiner Leitfahrzeug-Länge 13 und Leitfahrzeug-Breite 22,
- Anordnen der Leitfahrzeug-Mittellängsachse 12 in der halben Leitfahrzeug-Breite 22,
- Bilden einer virtuellen Folgefahrzeug-Grundrisskontur von jedem Folgefahrzeug 3, 3-1 im Wesentlichen in einer Rechteckform von dessen Maximalabmessungen mit seiner Folgefahrzeug-Länge 15 und Folgefahrzeug-Breite 23, und
- Anordnen jeder der Folgefahrzeug-Mittellängsachsen 14, 14-1 jeweils in halber Folgefahrzeug-Breite 23.

Mit dieser Vordefinition der jeweiligen Grundrisskonturen kann so insbesondere bei der nachfolgend beschriebenen Kurvenfahrt die Anordnung der jeweiligen Gelenkpunkte 19, 19-1 und auch die Einhaltung von vorbestimmten Abstandswerten zwischen den einzelnen Fahrzeugen 2, 3 und 3-1 leichter und sicherer gesteuert werden. Die Abstandswerte stellen zumeist oder bevorzugt Mindestabstände dar, welche nicht zu unterschreiten sind, um gegenseitige Kollisionen bei der autonomen Fortbewegung zu verhindern. Weiters können die Abstandswerte, insbesondere die Soll-Abstandswerte, auch in Abhängigkeit von der jeweiligen Fortbewegungsgeschwindigkeit der Fahrzeugkolonne 1 einen unterschiedlichen oder variablen Sollwert aufweisen. So können die Abstandswerte z.B. bei einer geringen Fahrgeschwindigkeit eher gering oder kurz gehalten werden und bei sich erhöhenden Fahrgeschwindigkeiten dazu vergrößert werden. Bevorzugt werden die Abstandswerte oder die Soll-Abstandswerte bei einer Fahrzeugkolonne 1 zwischen deren einzelnen Fahrzeugen 2, 3 gleich groß gewählt, wobei die zuvor beschriebene Verlängerung oder Verkürzung in Abhängigkeit von der jeweiligen Fortbewegungsgeschwindigkeit durchgeführt werden kann. So kann z.B. die Variation durch den Lenker oder Fahrer des Leitfahrzeugs 2 manuell durchgeführt werden. Es könnte aber auch in der Fahrzeugsteuerung eine entsprechende Wertetabelle und/oder Steuerungskurve hinterlegt sein, mittels der oder die Soll-Abstandswerte ermittelt oder berechnet werden. Es sind keine körperlichen oder baulichen Deichseln vorgesehen, sondern jeweils nur virtuelle Deichseln.

Weiters kann noch vorgesehen sein, dass zur Definition der einzelnen Gelenkpunkte 19, 19-1 der Leitfahrzeug-Abstand 20 und der erste Folgefahrzeug-Abstand 21 und gegebenenfalls auch jeder weitere der Folgefahrzeug-Abstände 21-1 mit zueinander gleich großen Abstandswerten ausgebildet werden. Bei einer zueinander geradlinigen Ausrichtung der beiden Projektionslinien 17, 18 von der Leitfahrzeug-Mittellängsachse 12 und von der Folgefahrzeug-Mittellängsachse 14 des zumindest einen ersten Folgefahrzeugs 3 soll die aus dem Leitfahrzeug-Abstand 20 und dem ersten Folgefahrzeug-Abstand 21 gebildete Summe dem Soll-Abstandswert entsprechen. Sind auch mehrere weitere Folgefahrzeuge 3-1 hinterhalb des ersten Folgefahrzeugs 3 vorgesehen, soll auch die aus den jeweiligen zwei weiteren Folgefahrzeug-Abständen 21-1 von unmittelbar hintereinander befindlichen Folgefahrzeugen 3 gebildete Summe jeweils dem Soll-Abstandswert entsprechen. Der Einfachheit halber werden jeweils alle Folgefahrzeug-Abstände zwischen unmittelbar hintereinander befindlichen Folgefahrzeugen 3, 3-1 mit demselben Bezugszeichen 21-1 versehen.

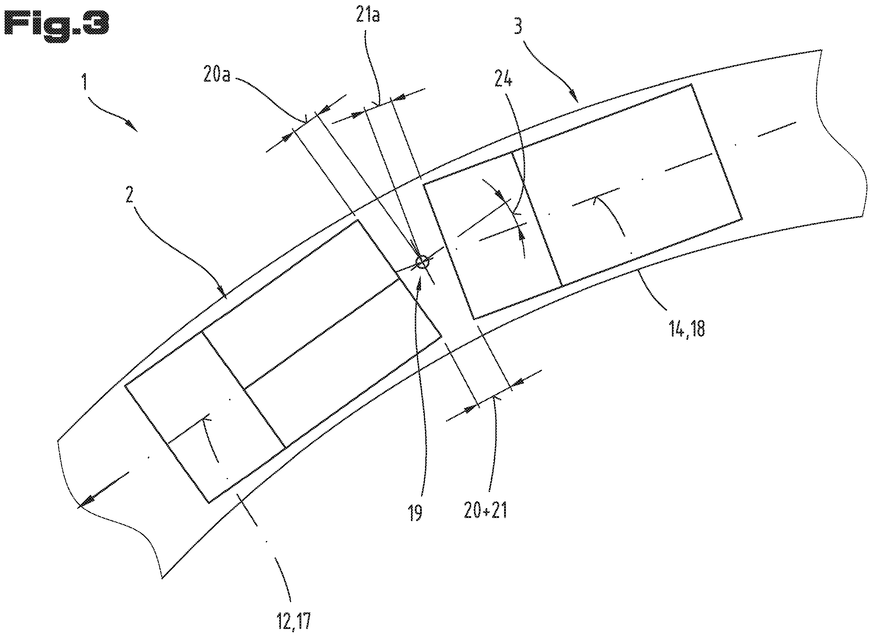

Wird eine Kurvenfahrt durchgeführt, so wie dies vereinfacht in der Fig. 3 zwischen dem Leitfahrzeug 2 und dem ersten Folgefahrzeug 3 dargestellt ist, befinden sich die beiden Projektionslinien 17, 18 von der Leitfahrzeug-Mittellängsachse 12 und der Folgefahrzeug-Mittellängsachse 14 des zumindest einen ersten Folgefahrzeugs 3 in einer zueinander abgewinkelten Stellung und schließen zwischen sich einen Knickwinkel 24 ein.

Da die Fahrzeuge 2, 3 und 3-1 jeweils auch eine Fahrzeug-Breite 22, 23 aufweisen und in der zueinander abgewinkelten Stellung der Fahrzeug-Mittellängsachsen 12, 14, 14-1 insbesondere in den jeweiligen linken oder rechten Eckbereichen die Gefahr des Unterschreitens des Mindestabstandes und damit verbundene Kollisionen verbunden sein können, kann dazu eine Anpassung der relativen Lage oder Position der jeweiligen virtuellen Gelenkpunkte 19, 19-1 zwischen den Fahrzeugen 2, 3 und 3-1 durchgeführt werden. Dies insbesondere dann, wenn der oder wenn die Soll-Abstandswerte zwischen den Fahrzeugen 2, 3 und 3-1 sehr kurz gehalten sind, um die Genauigkeit der spurtreuen Nachfahrt besser einhalten und steuern zu können. Der Mindestabstand kann z.B. 200 mm oder auch etwas mehr betragen. Dies bevorzugt jeweils in Abhängigkeit von der aktuellen Fortbewegungsgeschwindigkeit oder Fahrgeschwindigkeit.

Befinden sich die nun die Projektionslinie 17 der Leitfahrzeug-Mittellängsachse 12 und die Projektionslinie 18 der Folgefahrzeug-Mittellängsachse 14 des zumindest einen ersten Folgefahrzeugs 3 im Grundriss gesehen und in der Ebene der Aufstandsfläche 16 betrachtet in deren zueinander abgewinkelten Stellung, schließen diese den Knickwinkel 24 zwischen sich ein. Weiters ist dann sowohl der Leitfahrzeug-Abstand 20 als auch der erste Folgefahrzeug-Abstand 21 virtuell soweit zu vergrößern oder zu verlängern, bis ein Ist-Abstandswert zwischen einander nächstliegend befindlichen Abschnitten der beiden unmittelbar hintereinander befindlichen virtuellen Grundrisskonturen wiederum zumindest dem Soll-Abstandswert entspricht. Der Soll-Abstandswert im äußeren Randbereich zwischen den beiden unmittelbar hintereinander befindlichen virtuellen Grundrisskonturen kann aus der Summe des Leitfahrzeug-Abstands 20 und des ersten Folgefahrzeug-Abstands 21 bei sich in der Geradeausfahrt befindlichem Leitfahrzeug 2 und ersten Folgefahrzeug 3 gebildet werden. Bevorzug werden dabei jeweils der ursprüngliche Leitfahrzeug-Abstand 20 und auch der ursprüngliche erste Folgefahrzeug-Abstand 21 virtuell jeweils um dasselbe Längenausmaß vergrößert oder verlängert. Zur besseren Unterscheidung der ursprünglichen Abstände 20 und 21, sind diese in der Fig. 3 mit dem Zusatz "a" versehen.

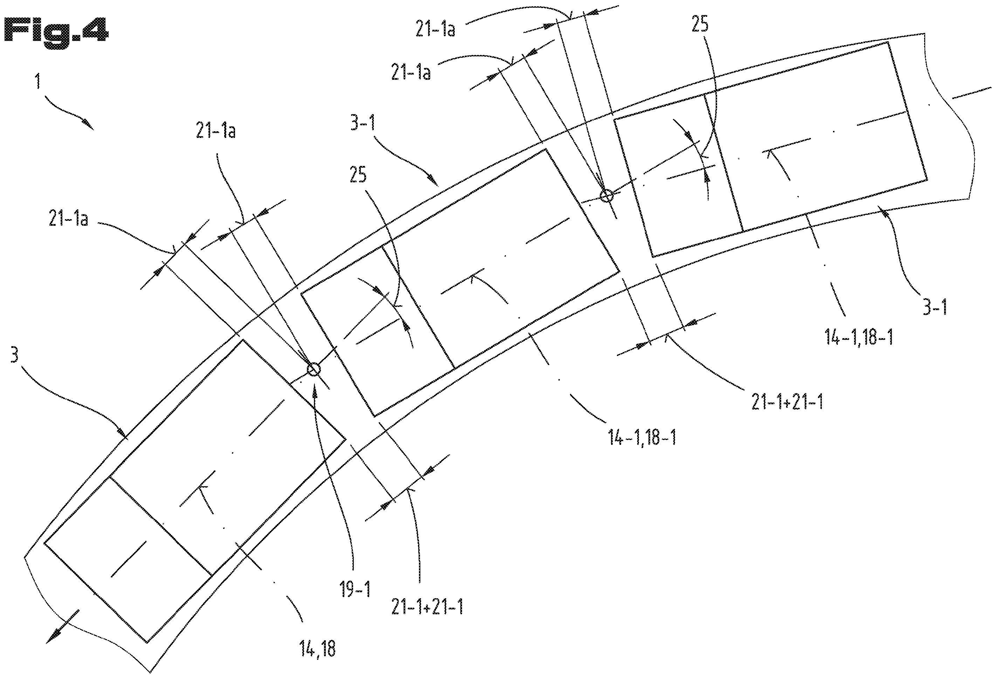

In der Fig. 4 ist in einem größeren Maßstab die Kurvenfahrt zwischen drei hintereinander befindlichen Folgefahrzeugen, nämlich dem ersten Folgefahrzeug 3 und zwei weiteren Folgefahrzeugen 3-1 gezeigt.

Bei einer ebenfalls zueinander unter einem Knickwinkel 25 abgewinkelten Ausrichtung der jeweiligen Projektionslinien 18-1 von den Folgefahrzeug-Mittellängsachsen 14-1 von jeweils unmittelbar hintereinander befindlichen Folgefahrzeugen 3, 3-1, sollen auch hier die weiteren ursprünglichen Folgefahrzeug-Abstände 21-1 jeweils virtuell soweit vergrößert werden, bis ein Ist-Abstandswert zwischen einander nächstliegend befindlichen Abschnitten der beiden unmittelbar hintereinander befindlichen Grundrisskonturen der Folgefahrzeug 3, 3-1 wiederum zumindest dem Soll-Abstandswert entsprechen. Die vergrößerten oder verlängerten Folgefahrzeug-Abstände 21-1 werden ebenfalls mit dem Zusatz "a" versehen.

Die tatsächlichen Ist-Abstandswerte zwischen den jeweiligen Fahrzeugen 2, 3 und 3-1 können z.B. Mittels jeweils zumindest eines Abstandssensors ermittelt werden. Damit kann zwischen jedem der Fahrzeuge 2, 3 und 3-1 der tatsächliche Ist-Abstand ermittelt werden. Bevorzugt kann jedoch jeweils zumindest ein Abstandssensor jeweils in einem äußeren Eckbereich von einer der Grundrisskonturen der einzelnen Fahrzeuge 2, 3 und 3-1 angeordnet werden. Dies kann bevorzugt jeweils in einem äußeren Eckbereich der Grundrisskontur des in Fortbewegungsrichtung gesehen jeweiligen vorderen Fahrzeugs 2, 3, 3-1 erfolgen. Es wäre aber auch möglich, die Abstandssensoren in Fortbewegungsrichtung gesehen jeweils an den Eckbereichen der jeweils nachfolgenden Fahrzeuge 3, 3-1 anzuordnen. Weiters könnte aber auch eine zueinander diagonale Anordnung der Abstandssensoren vorgesehen werden.

Weiters wäre es auch noch denkbar, dass eine Fahrzeugkolonne 1 zusammengestellt wird, welche das automatisierte Auslegen einer Schlauchleitung und auch das Aufsammeln oder Aufwickeln der ausgelegten Schlauchleitung durchführen kann und auch dazu ausgebildet ist. Um dies auch noch vollständig autonom durchführen zu können, kann vorab entlang der auszulegenden Schlauchstrecke der Fahrweg oder die Fahrstrecke zumindest einmal abgefahren werden und dabei die gesamte Fahrstrecke elektronisch aufgezeichnet und in einem eigenen Datensatz abgespeichert werden. Dieser Vorgang kann auch als Lernvorgang bezeichnet werden. Dieser mögliche Aufzeichnungsvorgang wurde bereits zuvor beschrieben und kann auch hier Anwendung finden.

Die Zusammenstellung der Fahrzeugkolonne 1 mit dem Leitfahrzeug 2 und des zumindest einen Folgefahrzeugs 3 kann für die durchzuführende Mission am Lagerplatz 4 des Stützpunkts 5, insbesondere in der Garage der Einsatzzentrale, erfolgen und auf die jeweiligen Basis-Fahrgestelle 7 die dazu erforderlichen Aufbaumodule 8 angeordnet und montiert werden. Dies kann wiederum analog erfolgen, wie dies zuvor beschrieben worden ist, wobei die erforderlichen Informationen dazu in einem eigenen Datensatz hinterlegt oder abgespeichert sein können.

Für die Anfahrt kann auch wiederum die Reihenfolge der einzelnen Fahrzeuge 2, 3 und 3-1 für diese Mission in einem eigenen Datensatz hinterlegt sein und die so zusammengestellte Fahrzeugkolonne 1 fährt bevorzugt zu dem ersten Bestimmungsort 6 hin. Ist dieser oder bereits der Startpunkt für die durchzuführende Mission, nämlich das Auslegen der Schlauchleitung erreicht, erfolgt die Abarbeitung der Mission, insbesondere die Fahrbewegung der Fahrzeugkolonne 1 autonom.

Es könnte aber auch eine durchzuführende Mission darin bestehen, dass am Bestimmungort mehrere der Fahrzeuge 2, 3 und 3-1 seitlich nebeneinander und gegebenenfalls auch in Fahrtrichtung zueinander versetzt angeordnet werden und so z.B. ein Schaumteppich oder ein Ölbindemittel großflächiger abgegeben oder aufgebracht werden kann. Das Leitfahrzeug 2 könnte von einer natürlichen Person betreiben und gelenkt werden und/oder auch autonom entlang einer vorbestimmten Wegstrecke die Fahrbewegung durchführen.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Fahrzeugkolonne
- 2: Leitfahrzeug
- 3: Folgefahrzeug
- 4: Lagerplatz
- 5: Stützpunkt
- 6: erster Bestimmungsort
- 7: Basis-Fahrgestell
- 8: Aufbaumodul
- 9: Leitstelle
- 10: Steuerungsvorrichtung
- 11: zweiter Bestimmungsort
- 12: Leitfahrzeug-Mittellängsachse
- 13: Leitfahrzeug-Länge
- 14: Folgefahrzeug-Mittellängsachse
- 15: Folgefahrzeug-Länge
- 16: Aufstandsfläche
- 17: Projektionslinie
- 18: Projektionslinie
- 19: Gelenkpunkt
- 20: Leitfahrzeug-Abstand
- 21: Folgefahrzeug-Abstand
- 22: Leitfahrzeug-Breite
- 23: Folgefahrzeug-Breite
- 24: Knickwinkel
- 25: Knickwinkel

## Patentansprüche

1. Verfahren zum Bereitstellen und Betreiben einer Fahrzeugkolonne (1), welche Fahrzeugkolonne (1) eine Mehrzahl von unmittelbar hintereinander angeordnete Fahrzeuge umfasst und zumindest ein Folgefahrzeug (3, 3-1) einem Leitfahrzeug (2) in Fortbewegungsrichtung autonom folgt,
- wobei mittels einer elektronischen Deichsel die die Fahrzeugkolonne (1) bildenden Fahrzeuge virtuell aneinander gekoppelt werden, wobei
- vom Leitfahrzeug (2) eine Leitfahrzeug-Mittellängsachse (12) in Richtung seiner Leitfahrzeug-Länge (13) definiert wird,
- wobei von dem zumindest einen ersten Folgefahrzeug (3) eine Folgefahrzeug-Mittellängsachse (14) in Richtung seiner Folgefahrzeug-Länge (15) definiert wird,
- wobei bei einer Projektion in Richtung auf eine ebenflächige Aufstandsfläche (16) von der Leitfahrzeug-Mittellängsachse (12) eine Projektionslinie (17) und von der Folgefahrzeug-Mittellängsachse (14) des zumindest einen ersten Folgefahrzeugs (3) eine weitere Projektionslinie (18) definiert wird,
- wobei die beiden Projektionslinien (17, 18) in einer gemeinsamen Geraden verlaufend angeordnet werden,
- wobei ein erster Soll-Abstandswert zwischen dem Leitfahrzeug (2) und dem zumindest einen ersten Folgefahrzeug (3) definiert wird und das zumindest eine erste Folgefahrzeug (3) hinterhalb des Leitfahrzeugs (2) in dem Soll-Abstandswert angeordnet wird, **dadurch gekennzeichnet**
- **dass** zwischen dem Leitfahrzeug (2) und dem zumindest einen ersten Folgefahrzeug (3) ein virtueller erster Gelenkpunkt (19) definiert wird, welcher virtueller erster Gelenkpunkt (19) sowohl auf der Projektionsline (17) der Leitfahrzeug-Mittellängsachse (12) als auch auf der Projektionsline (18) der Folgefahrzeug-Mittellängsachse (14) liegend angeordnet wird,
- **dass** der virtuelle erste Gelenkpunkt (19) vom Leitfahrzeug (2) in einem Leitfahrzeug-Abstand (20) und vom zumindest einen ersten Folgefahrzeug (3) in einem ersten Folgefahrzeug-Abstand (21) angeordnet wird, und
- **dass** vom virtuellen ersten Gelenkpunkt (19) ein Bezugspunkt für die Durchführung der Lenkbewegungen des zumindest einen ersten Folgefahrzeugs (3) bei der autonomen Fortbewegung der Fahrzeugkolonne (1) definiert wird.

2. Verfahren nach Anspruch 1, **dadurch gekennzeichnet,**
- **dass** zur Bildung der Fahrzeugkolonne (1) zumindest ein weiteres Folgefahrzeug (3-1) bereitgestellt wird, bevorzugt mehrere weitere Folgefahrzeuge (3-1), anschließend an das erste Folgefahrzeug (3) bereitgestellt werden,
- **dass** von jedem der weiteren Folgefahrzeuge (3-1) jeweils eine weitere Folgefahrzeug-Mittellängsachse (14-1) in Richtung seiner Folgefahrzeug-Länge (15) definiert wird,
- **dass** bei einer Projektion in Richtung auf die ebenflächige Aufstandsfläche (16) von jeder der weiteren Folgefahrzeug-Mittellängsachsen (14-1) jeweils eine weitere Projektionslinie (18-1) definiert wird,
- **dass** die jeweiligen weiteren Projektionslinien (18-1) in einer gemeinsamen Geraden verlaufend angeordnet werden,
- **dass** jeweils ein weiterer Soll-Abstandswert zwischen den jeweiligen Folgefahrzeugen (3 ,3-1) definiert wird und jedes der weiteren Folgefahrzeuge (3-1) jeweils in dem weiteren Soll-Abstandswert von dem unmittelbar in der Fahrzeugkolonne (1) vorgeordnet befindlichen Folgefahrzeug (3, 3-1) angeordnet wird,
- **dass** zwischen dem ersten Folgefahrzeug (3) und dem unmittelbar nachfolgenden weiteren Folgefahrzeug (3-1) und gegebenenfalls auch zwischen jedem der nachfolgenden weiteren Folgefahrzeuge (3-1) jeweils ein virtueller weiterer Gelenkpunkt (19-1) definiert wird und jeder der weiteren Gelenkpunkte (19-1) jeweils auf beiden von den jeweiligen Folgefahrzeug-Mittellängsachsen (14, 14-1) der Folgefahrzeuge (3, 3-1) definierten Projektionslinien (18, 18-1) liegend angeordnet wird,
- **dass** jeder der weiteren Gelenkpunkte (19-1) von den beiden jeweils in Fortbewegungsrichtung gesehen benachbart befindlichen Folgefahrzeugen (3, 3-1) jeweils in einem weiteren Folgefahrzeug-Abstand (21-1) angeordnet wird, und
- **dass** von jedem der weiteren Gelenkpunkte (19-1) jeweils ein weiterer Bezugspunkt für die Durchführung der Lenkbewegungen des jeweiligen Folgefahrzeugs (3-1) bei der autonomen Fortbewegung der Fahrzeugkolonne (1) definiert wird.

3. Verfahren nach Anspruch 1 oder 2, **dadurch gekennzeichnet,**
- **dass** vom Leitfahrzeug (2) eine virtuelle Leitfahrzeug-Grundrisskontur im Wesentlichen in einer Rechteckform von dessen Maximalabmessungen mit seiner Leitfahrzeug-Länge (13) und einer Leitfahrzeug-Breite (22) gebildet wird,
- **dass** die Leitfahrzeug-Mittellängsachse (12) in halber Leitfahrzeug-Breite (22) verlaufend angeordnet wird,
- **dass** von jedem Folgefahrzeug (3, 3-1) eine virtuelle Folgefahrzeug-Grundrisskontur im Wesentlichen in einer Rechteckform von dessen Maximalabmessungen mit seiner Folgefahrzeug-Länge (15) und einer Folgefahrzeug-Breite (23) gebildet wird, und
- **dass** jede der Folgefahrzeug-Mittellängsachsen (14, 14-1) jeweils in halber Folgefahrzeug-Breite (23) verlaufend angeordnet wird.

4. Verfahren nach einem der vorhergehenden Ansprüche, **dadurch gekennzeichnet, dass** der Leitfahrzeug-Abstand (20) und der erste Folgefahrzeug-Abstand (21) und gegebenenfalls auch jeder weitere der Folgefahrzeug-Abstände (21-1) mit zueinander gleich großen Abstandswerten ausgebildet werden.

5. Verfahren nach einem der vorhergehenden Ansprüche, **dadurch gekennzeichnet, dass** bei der zueinander geradlinigen Ausrichtung der Projektionslinien (17, 18) der Leitfahrzeug-Mittellängsachse (12) und der Folgefahrzeug-Mittellängsachse (14) des zumindest einen ersten Folgefahrzeugs (3) die aus dem Leitfahrzeug-Abstand (20) und dem ersten Folgefahrzeug-Abstand (21) gebildete Summe dem Soll-Abstandswert entspricht.

6. Verfahren nach einem der vorhergehenden Ansprüche, **dadurch gekennzeichnet, dass** bei einer zueinander unter einem Knickwinkel (24) abgewinkelten Ausrichtung der Projektionslinien (17, 18) der Leitfahrzeug-Mittellängsachse (12) und der Folgefahrzeug-Mittellängsachse (14) des zumindest einen ersten Folgefahrzeugs (3) der Leitfahrzeug-Abstand (20) und der erste Folgefahrzeug-Abstand (21) jeweils virtuell soweit vergrößert werden, bis ein Ist-Abstandswert zwischen einander nächstliegend befindlichen Abschnitten der beiden unmittelbar hintereinander befindlichen virtuellen Grundrisskonturen wiederum zumindest dem Soll-Abstandswert entspricht.

7. Verfahren nach Anspruch 6, **dadurch gekennzeichnet, dass** der Leitfahrzeug-Abstand (20) und der erste Folgefahrzeug-Abstand (21) virtuell jeweils um dasselbe Längenausmaß vergrößert werden.

8. Verfahren nach einem der Ansprüche 2 oder 3, **dadurch gekennzeichnet, dass** die aus den jeweiligen zwei weiteren Folgefahrzeug-Abständen (21-1) von unmittelbar hintereinander befindlichen Folgefahrzeugen (3) gebildete Summe jeweils dem Soll-Abstandswert entspricht.

9. Verfahren nach einem der Ansprüche 2, 3 oder 8, **dadurch gekennzeichnet, dass** bei einer zueinander unter einem Knickwinkel (25) abgewinkelten Ausrichtung der jeweiligen Projektionslinien (18-1) von Folgefahrzeug-Mittellängsachsen (14-1) von jeweils unmittelbar hintereinander befindlichen Folgefahrzeugen (3, 3-1) die weiteren Folgefahrzeug-Abstände (21-1) jeweils virtuell soweit vergrößert werden, bis ein Ist-Abstandswert zwischen einander nächstliegend befindlichen Abschnitten der beiden unmittelbar hintereinander befindlichen Grundrisskonturen wiederum zumindest dem Soll-Abstandswert entspricht.

10. Verfahren nach einem der vorhergehenden Ansprüche, **dadurch gekennzeichnet, dass** der Ist-Abstandswert mittels zumindest eines Abstandssensors ermittelt wird.

11. Verfahren nach Anspruch 10, **dadurch gekennzeichnet, dass** zumindest ein Abstandssensor jeweils in einem äußeren Eckbereich der Grundrisskontur angeordnet wird, insbesondere jeweils in einem äußeren Eckbereich der Grundrisskontur des in Fortbewegungsrichtung gesehen vorderen Fahrzeugs angeordnet wird.

12. Verfahren nach einem der vorhergehenden Ansprüche, **dadurch gekennzeichnet, dass** die Fahrzeuge (2, 3) der Fahrzeugkolonne (1) mit einem maximalen Fahrzeugbreitewert ausgebildet werden, der aus einem Fahrzeugbreite-Wertebereich stammt, dessen untere Grenze 1 m, insbesondere 1,4 m, und dessen obere Grenze 3 m, insbesondere 2,55 m, beträgt.

13. Verfahren nach einem der vorhergehenden Ansprüche, **dadurch gekennzeichnet, dass** jene die Fahrzeugkolonne (1) bildenden Fahrzeuge (2, 3) jeweils aus einem Basis-Fahrgestell (7) und einem darauf bedarfsweise anordenbaren Aufbaumodul (8), insbesondere einem Einsatzmodul, gebildet werden und die Basis-Fahrgestelle (7) und die Aufbaumodule (8) an einem Lagerplatz (4) eines Stützpunkts (5) voneinander getrennt abgestellt werden.

14. Verfahren nach einem der vorhergehenden Ansprüche, **dadurch gekennzeichnet, dass** in einer Steuerungsvorrichtung (10) einer Leitstelle (9) für zueinander unterschiedliche durchzuführende Missionen für die jeweils durchzuführende einzelne Mission die dazu erforderlichen Aufbaumodule (8) in einem Datensatz hinterlegt sind und bei einer eingehenden Anforderung zur Durchführung der Mission jeweils die im jeweiligen Datensatz hinterlegten Aufbaumodule (8) ausgewählt und auf jeweils eines der Basis-Fahrgestelle (7) montiert und damit die Fahrzeuge (2, 3) bereitgestellt werden, insbesondere das zumindest eine Folgefahrzeug (3, 3-1) bereitgestellt wird.

15. Verfahren nach Anspruch 14, **dadurch gekennzeichnet, dass** in dem für die jeweils durchzuführende Mission hinterlegten Datensatz auch die Reihenfolge der Folgefahrzeuge (3, 3-1) hinterlegt ist und bei Fahrtantritt hinterhalb des Leitfahrzeugs (2) die bereitgestellten Folgefahrzeuge (3, 3-1) in der im entsprechenden Datensatz vordefinierten Reihenfolge zu der Fahrzeugkolonne (1) nacheinander angeordnet werden.

16. Verfahren nach einem der vorhergehenden Ansprüche, **dadurch gekennzeichnet, dass** das Leitfahrzeug (2) während der Fahrbewegung der Fahrzeugkolonne (1) von einer natürlichen Person betrieben und manuell gelenkt wird und das zumindest eine Folgefahrzeug (3, 3-1) autonom bis zu einem ersten Bestimmungsort (6) nachfolgt und dass am ersten Bestimmungsort (6) das zumindest eine Folgefahrzeug (3, 3-1) von einer natürlichen Person übernommen und von der natürlichen Person weiter zu einem zweiten Bestimmungsort (11) geführt wird.

17. Verfahren nach Anspruch 16, **dadurch gekennzeichnet, dass** das zumindest eine Folgefahrzeug (3, 3-1) von der natürlichen Person betrieben und manuell gelenkt wird oder dass das zumindest eine Folgefahrzeug (3, 3-1) hinterhalb der natürlichen Person ausgehend vom ersten Bestimmungsort (6) hin zum zweiten Bestimmungsort (11) autonom nachfolgt.

18. Verfahren nach einem der Ansprüche 13 bis 15, **dadurch gekennzeichnet, dass** ausgehend vom Stützpunkt (5) bis zu jeweils einem ersten Bestimmungsort (6) die jeweilige Fahrstrecke vorab zumindest einmal abgefahren wird und dabei die gesamte Fahrstrecke elektronisch aufgezeichnet und in einem eigenen Datensatz abgespeichert wird und bei einer Anforderung, insbesondere in einem Einsatzfall, die vorbestimmte jeweilige Fahrstrecke ausgewählt und der dazugehörige eigene Datensatz dem Leitfahrzeug (2) bereitgestellt wird und die gesamte Fahrzeugkolonne (1) ausgehend vom Stützpunkt (5) entlang der im jeweils eigenen Datensatz hinterlegten jeweilige Fahrstrecke autonom bis zum ersten Bestimmungsort (6) hinfährt.

## Claims

1. A method for providing and operating a vehicle convoy (1), which vehicle convoy (1) comprises a plurality of vehicles arranged directly one behind the other and at least one following vehicle (3, 3-1) autonomously follows a leading vehicle (2) in the direction of travel,
- wherein the vehicles forming the vehicle convoy (1) are virtually coupled to one another by means of an electronic drawbar,
wherein
- a leading vehicle central longitudinal axis (12) is defined by the leading vehicle (2) in the direction of its leading vehicle length (13),
- wherein a following vehicle central longitudinal axis (14) is defined by the at least one first following vehicle (3) in the direction of its following vehicle length (15),
- wherein a projection line (17) is defined from the leading vehicle central longitudinal axis (12) and a further projection line (18) is defined from the following vehicle central longitudinal axis (14) of the at least one first following vehicle (3) when projected in the direction of a planar contact surface (16),
- wherein the two projection lines (17, 18) are arranged to extend in a common straight line,
- wherein a first target distance value is defined between the leading vehicle (2) and the at least one first following vehicle (3) and the at least one first following vehicle (3) is arranged behind the leading vehicle (2) at the target distance value, **characterized in**
- **that** a virtual first articulation point (19) is defined between the leading vehicle (2) and the at least one first following vehicle (3), which virtual first articulation point (19) is arranged lying both on the projection line (17) of the leading vehicle central longitudinal axis (12) and on the projection line (18) of the following vehicle central longitudinal axis (14),
- **that** the virtual first articulation point (19) is arranged at a leading vehicle distance (20) from the leading vehicle (2) and at a first following vehicle distance (21) from the at least one first following vehicle (3), and
- **that** a reference point for carrying out the steering movements of the at least one first following vehicle (3) during the autonomous movement of the vehicle convoy (1) is defined by the virtual first articulation point (19).

2. The method according to claim 1, **characterized in**
- **that** at least one further following vehicle (3-1) is provided to form the vehicle convoy (1), preferably a plurality of further following vehicles (3-1) are provided downstream of the first following vehicle (3),
- **that** each of the further following vehicles (3-1) defines a further following vehicle central longitudinal axis (14-1) in the direction of its following vehicle length (15),
- **that**, when projected in the direction of the planar contact surface (16), a further projection line (18-1) is defined in each case from each of the further following vehicle central longitudinal axes (14-1),
- **that** the respective further projection lines (18-1) are arranged to extend in a common straight line,
- **that** a further target distance value is defined in each case between the respective following vehicles (3, 3-1) and each of the further following vehicles (3-1) is arranged in each case at the further target distance value from the following vehicle (3, 3-1) located immediately upstream in the vehicle convoy (1),
- **that** a virtual first further articulation point (19-1) is defined between the first following vehicle (3) and the immediately following further following vehicle (3-1) and, optionally, also between each of the following further following vehicles (3-1), and each of the further articulation points (19-1) is arranged lying in each case on both projection lines (18, 18-1) defined by the respective following vehicle central longitudinal axes (14, 14-1) of the following vehicles (3, 3-1),
- **that** each of the further articulation points (19-1) is arranged at a further following vehicle distance (21-1) from the two following vehicles (3, 3-1) which are respectively adjacent as seen in the direction of travel, and
- **that** each of the further articulation points (19-1) defines a further reference point for carrying out the steering movements of the respective following vehicle (3-1) during the autonomous movement of the vehicle convoy (1).

3. The method according to claim 1 or 2, **characterized in**
- **that** a virtual leading vehicle ground plan contour is formed by the leading vehicle (2) essentially in a rectangular shape of its maximum dimensions with its leading vehicle length (13) and a leading vehicle width (22),
- **that** the leading vehicle central longitudinal axis (12) is arranged to extend at half the leading vehicle width (22),
- **that** each following vehicle (3, 3-1) forms a virtual following vehicle ground plan contour substantially in a rectangular shape of its maximum dimensions with its following vehicle length (15) and a following vehicle width (23), and
- **that** each of the following vehicle central longitudinal axes (14, 14-1) is arranged to extend at half the following vehicle width (23).

4. The method according to one of the preceding claims, **characterized in that** the leading vehicle distance (20) and the first following vehicle distance (21) and optionally also each further of the following vehicle distances (21-1) are configured with distance values equal to each other.

5. The method according to one of the preceding claims, **characterized in that**, when the projection lines (17, 18) of the leading vehicle central longitudinal axis (12) and the following vehicle central longitudinal axis (14) of the at least one first following vehicle (3) are aligned in a straight line with respect to one another, the sum formed from the leading vehicle distance (20) and the first following vehicle distance (21) corresponds to the target distance value.

6. The method according to one of the preceding claims, **characterized in that**, when the projection lines (17, 18) of the leading vehicle central longitudinal axis (12) and the following vehicle central longitudinal axis (14) of the at least one first following vehicle (3) are aligned at a buckling angle (24) to one another, the leading vehicle distance (20) and the first following vehicle distance (21) are each virtually increased to such an extent, until an actual distance value between the closest sections of the two virtual layout contours located directly behind one another in turn corresponds at least to the target distance value.

7. The method according to claim 6, **characterized in that** the leading vehicle distance (20) and the first following vehicle distance (21) are each virtually increased by the same length dimension.

8. The method according to one of claims 2 or 3, **characterized in that** the sum formed from the respective two further following vehicle distances (21-1) of following vehicles (3) located directly behind one another corresponds in each case to the target distance value.

9. The method according to one of claims 2, 3 or 8, **characterized in that**, when the respective projection lines (18-1) of following vehicle central longitudinal axes (14-1) of following vehicles (3, 3-1) located directly behind one another are aligned at a buckling angle (25) to one another, the further following vehicle distances (21-1) are each virtually increased until an actual distance value between the closest sections of the two layout contours located directly behind one another in turn corresponds at least to the target distance value.

10. The method according to one of the preceding claims, **characterized in that** the actual distance value is determined by means of at least one distance sensor.

11. The method according to claim 10, **characterized in that** at least one distance sensor is arranged in each case in an outer corner region of the layout contour, in particular is arranged in each case in an outer corner region of the layout contour of the front vehicle as seen in the direction of travel.

12. The method according to one of the preceding claims, **characterized in that** the vehicles (2, 3) of the vehicle convoy (1) are configured with a maximum vehicle width value which originates from a vehicle width value range the lower limit of which is 1 m, in particular 1.4 m, and the upper limit of which is 3 m, in particular 2.55 m.

13. The method according to one of the preceding claims, **characterized in that** those vehicles (2, 3) forming the vehicle convoy (1) are each formed from a base chassis (7) and a superstructure module (8), in particular an insert module, which can be arranged thereon as required, and the base chassis (7) and the superstructure modules (8) are parked separately from one another at a storage location (4) of a base (5).

14. The method according to one of the preceding claims, **characterized in that**, in a controller (10) of a control station (9), the superstructure modules (8) required for different missions to be carried out are stored in a data set for the individual mission to be carried out in each case and, in the event of an incoming request to carry out the mission, the superstructure modules (8) stored in the respective data set are selected and mounted on one of the base chassis (7) in each case and the vehicles (2, 3) are thus provided, in particular the at least one following vehicle (3, 3-1) is provided.

15. The method according to claim 14, **characterized in that** the sequence of the following vehicles (3, 3-1) is also stored in the data set stored for the respective mission to be carried out and, upon travel commencement, the following vehicles (3, 3-1) provided are arranged one after the other behind the leading vehicle (2) in the sequence predefined in the corresponding data set for the vehicle convoy (1).

16. The method according to one of the preceding claims, **characterized in that** the leading vehicle (2) is operated and manually steered by a natural person during the movement of the vehicle convoy (1) and the at least one following vehicle (3, 3-1) follows autonomously up to a first destination (6) and that at the first destination (6) the at least one following vehicle (3, 3-1) is taken over by a natural person and is further guided by the natural person to a second destination (11).

17. The method according to claim 16, **characterized in that** the at least one following vehicle (3, 3-1) is operated and manually steered by the natural person or that the at least one following vehicle (3, 3-1) autonomously follows behind the natural person starting from the first destination (6) to the second destination (11).

18. The method according to one of claims 13 to 15, **characterized in that**, starting from the base (5) up to a respective first destination (6), the respective route is travelled at least once in advance and the entire route is recorded electronically and stored in a separate data set and, in the event of a request, in particular in an emergency, the predetermined respective route is selected and the associated separate data set is provided to the leading vehicle (2) and the entire vehicle convoy (1), starting from the base (5), travels autonomously along the respective route stored in the respective separate data set to the first destination (6).

## Revendications

1. Procédé pour la fourniture et le fonctionnement d'un convoi de véhicules (1), ce convoi de véhicules (1) comprenant une pluralité de véhicules disposés immédiatement les uns derrière les autres et au moins un véhicule suiveur (3, 3-1) suivant un véhicule de tête (2) de manière autonome dans la direction de déplacement,
- dans lequel, au moyen d'un timon électronique, les véhicules formant le convoi de véhicules (1) sont couplés entre eux de manière virtuelle,
- un axe longitudinal central de véhicule de tête (12) est défini par le véhicule de tête (2) dans la direction de sa longueur de véhicule de tête (13),
- dans lequel un axe longitudinal central de véhicule suiveur (14) est défini par l'au moins un premier véhicule suiveur (3) dans la direction de sa longueur de véhicule suiveur (15),
- dans lequel, lors d'une projection dans la direction d'une surface d'implantation plane (16), l'axe longitudinal central de véhicule de tête (12) définit une ligne de projection (17) et l'axe longitudinal central de véhicule suiveur (14) de l'au moins un premier véhicule suiveur (3) définit une autre ligne de projection (18),
- dans lequel les deux lignes de projection (17, 18) sont disposées de façon à s'étendre dans une droite commune,
- dans lequel une première valeur de distance de consigne est définie entre le véhicule de tête (2) et l'au moins un premier véhicule suiveur (3) et l'au moins un premier véhicule suiveur (3) est disposé derrière le véhicule de tête (2) dans la valeur de distance de consigne, **caractérisé en ce que**
- entre le véhicule de tête (2) et l'au moins un premier véhicule suiveur (3), est défini un premier point d'articulation virtuel (19), ce premier point d'articulation virtuel (19) étant disposé aussi bien sur la ligne de projection (17) de l'axe longitudinal central de véhicule de tête (12) que sur la ligne de projection (18) de l'axe longitudinal central de véhicule suiveur (14),
- le premier point d'articulation virtuel (19) est disposé par le véhicule de tête (2) à une distance de véhicule de tête (20) et par l'au moins un premier véhicule suiveur (3) à une première distance de véhicule suiveur (21) et
- le premier point d'articulation virtuel (19) définit un point de référence pour la réalisation des mouvements de guidage de l'au moins un premier véhicule suiveur (3) lors du déplacement autonome du convoi de véhicules (1).

2. Procédé selon la revendication 1, **caractérisé en ce que**
- pour la formation du convoi de véhicules (1), au moins un autre véhicule suiveur (3-1) est mis à disposition, de préférence plusieurs autres véhicules suiveurs (3-1) sont mis en disposition à la suite du premier véhicule suiveur (3),
- chacun des autres véhicules suiveurs (3-1) définit respectivement un autre axe longitudinal central de véhicule suiveur (14-1) dans la direction de sa longueur de véhicule suiveur (15),
- lors d'une projection dans la direction de la surface d'implantation plane (16), chacun des autres axes longitudinaux centraux de véhicules suiveurs (14-1) définit respectivement une autre ligne de projection (18-1),
- les autres lignes de projection (18-1) sont disposées de façon à s'étendre dans une droite commune,
- une autre valeur de distance de consigne est définie respectivement entre les véhicules suiveurs (3, 3-1) respectifs et chacun des autres véhicules suiveurs (3-1) est disposé respectivement à l'autre valeur de distance de consigne par rapport au véhicule suiveur (3, 3-1) se trouvant immédiatement avant dans le convoi de véhicules (1),
- entre le premier véhicule suiveur (3) et l'autre véhicule suiveur (3-1) qui le suit immédiatement et, le cas échéant également entre chacun des autres véhicules suiveurs (3-1) suivants, est défini respectivement un autre point d'articulation virtuel (19-1) et chacun des points d'articulation virtuels (19-1) est disposé respectivement de façon à se trouver sur les deux lignes de projection (18, 18-1) définies par les axes longitudinaux centraux de véhicules suiveurs (14, 14-1) des véhicules suiveurs (3, 3-1),
- chacun des autres points d'articulation (19-1) est disposé, par les deux véhicules suiveurs (3, 3-1) adjacents, vus respectivement dans la direction du déplacement, à une autre distance de véhicule suiveur (21-1) et
- chacun des autres points d'articulation (19-1) définit respectivement un autre point de référence pour la réalisation des mouvements de guidage du véhicule suiveur (3-1) respectif lors du déplacement autonome du convoi de véhicules (1).

3. Procédé selon la revendication 1 ou 2, **caractérisé en ce que**
- le véhicule de tête (2) forme un contour de base virtuel de véhicule de tête de forme globalement rectangulaire présentant ses dimensions maximales, avec sa longueur de véhicule de tête (13) et sa largeur de véhicule de tête (22),
- l'axe longitudinal central de véhicule de tête (12) est disposé de façon à se trouver au milieu de la largeur de véhicule de tête (22),
- chaque véhicule suiveur (3, 3-1) forme un contour de base virtuel de véhicule suiveur de forme globalement rectangulaire présentant ses dimensions maximales, avec sa longueur de véhicule suiveur (15) et sa largeur de véhicule suiveur (23) et
- chacun des axes longitudinaux centraux de véhicules suiveurs (14, 14-1) est disposé respectivement au milieu de la largeur de véhicule suiveur (23).

4. Procédé selon l'une des revendications précédentes, **caractérisé en ce que** la distance de véhicule de tête (20) et la première distance de véhicule suiveur (21) et, le cas échéant, également l'autre des distances de véhicules suiveurs (21-1), présentent des valeurs de distances égales entre elles.

5. Procédé selon l'une des revendications précédentes, **caractérisé en ce que**, lors d'une orientation en ligne droite entre elles des lignes de projection (17, 18) de l'axe longitudinal central de véhicule de tête (12) et de l'axe longitudinal central de véhicule suiveur (14) de l'au moins un véhicule suiveur (3), la somme de la distance de véhicule de tête (20) et de la première distance de véhicule suiveur (21) correspond à la valeur de distance de consigne.

6. Procédé selon l'une des revendications précédentes, **caractérisé en ce que**, lors d'une orientation avec un angle d'articulation (24) entre elles des lignes de projection (17, 18) de l'axe longitudinal central de véhicule de tête (12) et de l'axe longitudinal central de véhicule suiveur (14) de l'au moins un véhicule suiveur (3), la distance de véhicule de tête (20) et la première distance de véhicule suiveur (21) sont virtuellement agrandies jusqu'à ce qu'une valeur de distance effective entre des portions proches entre elles des deux contours de base virtuels se trouvant immédiatement l'un derrière l'autre correspond à nouveau au moins à la valeur de distance de consigne.

7. Procédé selon la revendication 6, **caractérisé en ce que** la distance de véhicule de tête (20) et la première distance de véhicule suiveur (21) sont virtuellement agrandies de la même dimension de longueur.

8. Procédé selon l'une des revendications 2 ou 3, **caractérisé en ce que** la somme des deux autres distances de véhicules suiveurs (21-1) respectives de véhicules suiveurs (3) se trouvant immédiatement l'un derrière l'autre correspond respectivement à la valeur de distance de consigne.

9. Procédé selon l'une des revendications 2, 3 ou 8, **caractérisé en ce que**, lors d'une orientation avec un angle d'articulation (25) entre elles des lignes de projection (18-1) respectives des axes longitudinaux centraux de véhicules suiveurs (14-1) de véhicules suiveurs (3, 3-1) respectifs se trouvant immédiatement l'un derrière l'autre, les autres distances de véhicules suiveurs (21-1) sont virtuellement agrandies jusqu'à ce qu'une valeur de distance effective entre des portions proches entre elles des deux contours de base virtuels se trouvant immédiatement l'un derrière l'autre correspond à nouveau au moins à la valeur de distance de consigne.

10. Procédé selon l'une des revendications précédentes, **caractérisé en ce que** la valeur de distance effective est déterminée au moyen d'au moins un capteur de distance.

11. Procédé selon la revendication 10, **caractérisé en ce qu'**au moins un capteur de distance est disposé respectivement dans un angle externe du contour de base, plus particulièrement respectivement dans un angle externe du contour de base du véhicule de devant, vu dans la direction du déplacement.

12. Procédé selon l'une des revendications précédentes, **caractérisé en ce que** les véhicules (2, 3) du convoi de véhicules (1) sont réalisés avec une valeur de largeur de véhicule maximale, qui provient de la plage de valeurs de largeur de véhicule dont la limite inférieure est de 1 m, plus particulièrement de 1,4 m et dont la limite supérieure est de 3 m, plus particulièrement de 2,55 m.

13. Procédé selon l'une des revendications précédentes, **caractérisé en ce que** les véhicules (2, 3) formant le convoi de véhicules (1) sont constitués respectivement d'un châssis de base (7) et d'un module de carrosserie (8) pouvant être disposé dessus si nécessaire, plus particulièrement d'un insert modulaire, et les châssis de base (7) et les modules de carrosserie (8) sont déposés séparément entre eux au niveau d'un emplacement de stockage (4) d'une base (5).

14. Procédé selon l'une des revendications précédentes, **caractérisé en ce que**, dans un dispositif de commande (10) d'un poste de commande (9) pour des tâches différentes entre elles, les modules de carrosserie (8) nécessaires aux différentes tâches à exécuter sont enregistrés dans un jeu de données et, lors d'une demande entrante concernant l'exécution de la tâche, les modules de carrosserie (8) respectifs enregistrés dans le jeu de données respectif sont sélectionnés et montés sur respectivement un des châssis de base (7) et les véhicules (2, 3) sont ainsi mis à disposition, plus particulièrement l'au moins un véhicule suiveur (3, 3-1) est mis à disposition.

15. Procédé selon la revendication 14, **caractérisé en ce que**, dans le jeu de données enregistré pour la tâche respective à exécuter, l'ordre des véhicules suiveurs (3, 3-1) est également enregistré et, lors du début du trajet, derrière le véhicule de tête (2), les véhicules suiveurs (3, 3-1) mis à disposition sont disposés les uns derrière les autres dans l'ordre prédéfini dans le jeu de données correspondant pour le convoi de véhicules (1).

16. Procédé selon l'une des revendications précédentes, **caractérisé en ce que** le véhicule de tête (2) est conduit, pendant le trajet du convoi de véhicules (1), par une personne et est guidé manuellement et 'au moins un véhicule suiveur (3, 3-1) suit de manière autonome jusqu'à une première destination (6) et **en ce que**, au niveau de la première destination (6), l'au moins un véhicule suiveur (3, 3-1) est pris en charge par une personne et est conduit par la personne plus loin vers une deuxième destination (11).

17. Procédé selon la revendication 16, **caractérisé en ce que** l'au moins un véhicule suiveur (3, 3-1) est conduit par la personne et est guidé manuellement ou **en ce que** l'au moins un véhicule suiveur (3, 3-1) suit de manière autonome à partir de derrière la personne, de la première destination (6) jusqu'à la deuxième destination (11).

18. Procédé selon l'une des revendications 13 à 15, **caractérisé en ce que**, à partir de base (5) jusqu'à respectivement une première destination (6), le trajet respectif est d'abord parcouru une fois et l'ensemble du trajet est enregistré électroniquement et enregistré dans un jeu de données propre
et, lors d'une demande, plus particulièrement dans le cas d'une intervention, le trajet respectif prédéterminé est sélectionné et le jeu de données correspondant est mis à la disposition du véhicule de tête (2) et l'ensemble du convoi de véhicules (1) se déplace, à partir de la base (5) le long du trajet respectif enregistré dans le jeu de données respectif, de manière autonome jusqu'à la première destination (6).
